# EUROPEAN PATENT SPECIFICATION

(11) **EP 2 268 151 B1**
(45) Date of publication and mention of the grant of the patent: **14.12.2011**
(21) Application number: 09735938.4
(22) Date of filing: 01.04.2009
(51) Int. Cl.: A23C 3/033, A23G 9/30, A23L 3/00, A23L 3/22

(54) **HIGH-EFFICIENCY, EASY-TO-CLEAN PASTEURIZING GROUP OF LIQUID FOOD MIXTURES**
HOCHEFFIZIENTE UND LEICHT ZU REINIGENDE PASTEURISIERUNGSGRUPPE FÜR FLÜSSIGE LEBENSMITTELMISCHUNGEN
GROUPE DE PASTEURISATION DE GRANDE EFFICACITÉ ET FACILE À NETTOYER POUR MÉLANGES ALIMENTAIRES LIQUIDES

(30) Priority: 23.04.2008 IT MI20080736
(43) Date of publication of application: 05.01.2011
(73) Proprietor: G.S.G. S.r.l., 36100 Vicenza (IT)
(72) Inventor: BRAVO, Genesio, I-36075 Alte Ceccato (Vicenza) (IT); BRAVO, Stefano, I-36050 Sovizzo (Vicenza) (IT)
(74) Representative: Martegani, Franco
(86) International application number: PCT/EP2009/002443
(87) International publication number: WO 2009/129918

(56) References cited:
- GB-A- 653 403
- US-A- 4 416 194
- US-A- 5 503 064
- US-A- 5 846 583
- US-A- 6 136 362

## Description

The present invention relates to a high-efficiency, easy-to-clean pasteurizing group of liquid food mixtures.

Pasteurizing machines, in particular for the product tion of so-called soft ice-cream and also machines for the semi-industrial production of ice-cream, generally effect successive and/or alternating cooling and heating treatment on a liquid food mixture, preferably in rapid times and on reduced quantities of liquids.

The pasteurizing group, object of the present invention, could also be applied for the heating and/or cooling of a liquid mixture connected on line with homogenization machines.

In particular, the above pasteurizing machines initially effect a heating of the relative liquid food mixture up to a certain temperature, they subsequently maintain this temperature for a certain time and finally cool the warm liquid food mixture as rapidly as possible to a final temperature of +4°C.

During this passage from the temperature selected to +4°C, said machines must isolate the relative liquid mixture so that there is no contact with extraneous external elements, normally at room temperature, which could, in fact, contaminate the mixture and nullify the pasteurization.

Some continuous pasteurization systems currently known for imposing the above temperatures exploit exchangers of the plate or concentric tubular type, which, however, have numerous technical drawbacks linked to a considerable construction complexity.

It can also be observed how these known machines described above require difficult inspection and cleaning operations and also, if used as coolers, have considerable problems relating to the formation of ice which threatens to block the liquid flow.

In some of these known pasteurization plants with plate exchangers, they are produced with a system defined as "heat recovery" of the hot mixture at +85°C in which the heat of the hot mixture itself leaving the machine is partly used for heating the new mixture to be pasteurized at the inlet of the machine.

In this latter case described, however, the route to be followed by the mixture is considerably complex jeopardizing the facility of dismantling and cleaning the machine in which the hot mixture must be brought upstream of the whole plate exchanger.

Two examples of this kind of known solution, suffering the drawbacks hereinabove described are shown in US patents no. US 6,136,362 and US 5, 846, 583 in which, when the food mixture in the pasteurization device has not reached a certain temperature, it is extracted from the pasteurization device, lead to a tank and then introduced again in the pasteurization device.

Finally, other small-medium sized pasteurization devices of the batch type are currently known, for which, the product is placed in closed containers and heated with electric resistances or indirectly with hot water.

The product must then be continuously stirred by a mixer and cooled with copper tubes, outside the container, in which cooling liquid circulates until a temperature suitable for pasteurization is reached.

These devices are evidently inconvenient and require long pauses between one cycle and the next.

A general objective of the present invention is to solve the problems indicated above of the known art in an extremely simple, economical and particularly functional manner.

A further objective is to provide a pasteurization group which is capable of effecting a continuous, correct and rapid pasteurization of the liquid food mixture to be pasteurized.

Another objective is to provide a pasteurization group which is particularly easy to assemble and dismantle, consequently allowing an easy cleaning of all the components of the same group.

In view of the above objectives, according to the present invention, a high-efficiency, easy-to-clean pasteurizing group of liquid food mixtures has been conceived, having the characteristics specified in the enclosed claims.

The structural and functional characteristics of the present invention and its advantages with respect to the known art will appear more evident from the following description, referring to the enclosed drawings, which show a high-efficiency, easy-to-clean pasteurizing group of liquid food mixtures produced according to the innovative principles of the same invention.

In the drawings;
- figure 1 shows a partial cross-sectional view of a high-efficiency, easy-to-clean pasteurizing group of liquid food mixtures according to the present invention;
- figure 2 shows a partial cross-sectional view of a high-efficiency pasteurizing group of liquid food mixtures of figure 1 in another functioning phase;
- figure 3 shows a partial cross-sectional view of another high-efficiency, easy-to-clean pasteurizing group of liquid food mixtures according to the present invention;
- figure 4 shows a raised side view of an element of the pasteurizing group according to the present invention;
- figure 5 shows a partial cross-sectional view of a high-efficiency pasteurizing group of liquid food mixtures of figure 3 in another functioning phase;
- figure 6 shows an exploded partial cross-sectional view of a high-efficiency pasteurizing group of liquid food mixtures of figure 3; and
- figure 7 shows a partial cross-sectional view of another high-efficiency, easy-to-clean pasteurizing group of liquid food mixtures according to the present invention.

With reference to the drawings, a high-efficiency, easy-to-clean pasteurizing group of liquid food mixtures in question is indicated as a whole with 10.

Said pasteurizing group 10 according to the present invention comprises at least one pasteurizing device 11, 12, at least one supply duct 13, 14 and at least one outlet duct 15, 16 for the liquid food mixtures to be pasteurized respectively associated upstream and downstream, i.e. with an upper portion and a lower portion, of the at least one pasteurizing device 11, 12.

In particular therefore, with respect to what is described above, the liquid food mixture to be pasteurized enters the relative at least one pasteurizing device 11, 12 passing through the relative at least one supply duct 13, 14 and after undergoing at least one thermal treatment, which is described further on, leaves the same pasteurizing device 11, 12 through the relative at least one outlet duct 15, 16.

According to the invention, the presence is envisaged of temperature control means 17, 18 of the liquid food mixtures inside the at least one pasteurizing device 11, 12 and/or which pass through the at least one outlet duct 15, 16 leaving the relative at least one pasteurizing device 11, 12, in addition to selective blocking means 35, 36, such as two-way intercept valves, of the same at least one outlet duct 15, 16.

In particular, the above selective blocking means 35, 36, of the relative at least one outlet duct 15, 16 selectively proceed with blocking it when the liquid food mixture to be pasteurized inside the at least one pasteurizing device 11, 12 and/or leaving the same is not at a certain temperature.

In this way, the liquid food mixture to be pasteurized is prevented from leaving the at least one pasteurizing device 11, 12 until it reaches the above certain temperature.

Each pasteurizing device 11, 12 envisaged comprises a cylindrical chamber 19, 20, a cylindrical rotor 23, 24, having an outer diameter substantially equal to the internal diameter of the cylindrical chamber 19, 20 and equipped on the outer surface with a helicoidal cavity, or groove, 25, 26, preferably having a rectangular section, and also, as can be deduced from what is described above, thermal exchange means 21, 22, 21' acting on the liquid food mixture to be pasteurized.

In particular, said thermal exchange means 21, 22, 21' act on the liquid food mixture advancing on the outer surface of the cylindrical rotor 23, 24 rotating inside the helicoidal cavity, or groove, 25, 26.

In order to impose rotation on at least one cylindrical rotor 23, 24 present, the latter comprises, at one end, an entrainment shaft 27, 28, which protrudes externally from a circular opening of the relative at least one cylindrical chamber 19, 20, whose shaft 27, 28 can be associated with any type of motor, not shown in the figures. The above at least one cylindrical rotor 23, 24 also comprises at the opposite end of the entrainment shaft 27, 28, a buffer surface 29, 30 which, in use of the group 10, is juxtaposed/coupled with a removable closing flange 31, 32 of the at least one cylindrical chamber 19, 20.

In particular, in order to facilitate the extraction of at least one cylindrical rotor 23, 24 from the relative at least one cylindrical chamber 19, 20, and consequently to allow the cleaning of the components of the group 10, the above closing flange 31, 32 can be removed and maintained in a closed position by fixing means 37, 38 of the removable type, such as for example a screw 37, 38 or at least one rapid hook not shown in the figure.

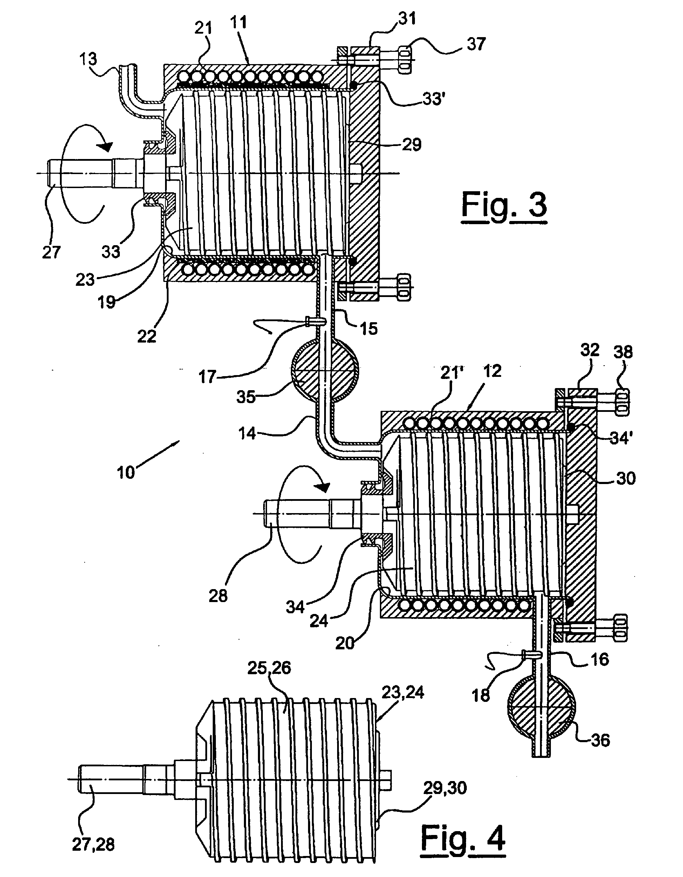

Figure 4 schematically shows an exploded group 10 according to the present invention, in which this configuration can be simply reached, as described above, by only acting on the fixing screws 37, 38 of the removable closing flange 31, 32 on the relative at least one cylindrical chamber 19, 20.

Furthermore, in order to isolate the liquid mixture in the pasteurizing phase during the passage inside the at least one pasteurizing device 11, 12 present, i.e. between the at least one cylindrical rotor 23, 24 and the at least one side wall of the relative cylindrical chamber 19, 20, the presence is envisaged of sealing means 33, 34, 33', 34' of the rotor 23, 24 in the relative at least one cylindrical chamber 19, 20 closed by the closing flange 31, 32.

This aspect is particularly important for preventing any contact between the liquid mixture in the pasteurization phase and extraneous external elements, normally at room temperature, which could contaminate the mixture and nullify the pasteurization.

According to a preferred embodiment shown in the figures, said sealing means 33, 34, 33', 34' comprise at least one rotating sealing ring 33, 34, which creates the sealing between the entrainment shaft 27, 28 and the hole of the relative cylindrical chamber 19, 20 from which it at least partially exits, and at least one sealing washer 33', 34' interposed between the at least one cylindrical chamber 19, 20 and the relative closing flange 31, 32.

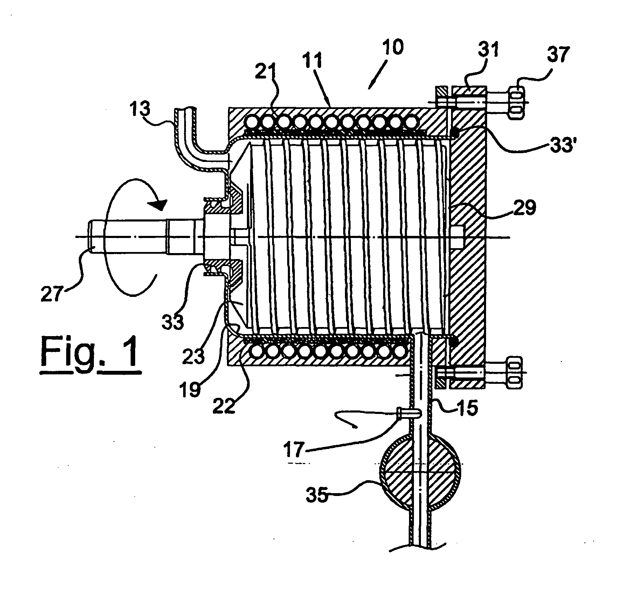

According to the first preferred embodiment shown in figures 1 and 2, the pasteurization group 10 of liquid food mixtures according to the present invention comprises a pasteurizing device 11 as described above and equipped with thermal exchange means 21, 22, 21', in addition to a supply duct 13 and an outlet duct 15 associated with the pasteurizing device 11 in which the liquid food mixture to be pasteurized passes.

According to this embodiment, there is the presence of a measuring device of the temperature 17 of the liquid food mixture leaving the pasteurizing device 11 respectively associated with the outlet duct 15 and also, downstream of the temperature measuring device 17, a selective blocking device 35 of the outlet duct 15 itself.

In particular, in this embodiment, the temperature measuring device 17 controls both the selective blocking device 35 of the outlet duct 15 and also the thermal exchange means 21, 22, 21' present in the pasteurizing device 11 which act on the mixture advancing in the cavity 25 of the roll 23.

In this pasteurizing group 10 as initially described above, configuration visible in figure 2, the outlet duct 15 is closed by the selective blocking device 35 and the thermal exchange means 21, 22, 21' heat the mixture until the temperature measuring device 17 reveals a certain temperature, normally about 85°C.

Once the temperature measuring device 17 has revealed this temperature, it commands thermal exchange means 21, 22, 21' to cool the liquid food mixture, entrapped by the selective blocking device 35 in the pasteurizing device 11, until the temperature measuring device 17 reveals a certain temperature of about 4°.

Once the temperature measuring device 17 has revealed this temperature, configuration visible in figure 1, it commands the selective blocking device 35 to open to allow the pasteurized liquid food mixture to flow towards the outside.

According to this first preferred embodiment therefore the pasteurizing device 11 alternatively acts as a heating and cooling pasteurizing device controlled by the temperature measuring device 17, which also "frees" the outlet duct 15 only when the pasteurization is complete.

According to a second preferred embodiment shown in figure 3 the pasteurizing group 10 of liquid food mixtures according to the present invention comprises a first and a second pasteurizing device 11, 12, as described above and not necessarily having the same dimensions, in addition to a first and second supply duct 13, 14 and a first and second outlet duct 15, 16 respectively associated with the first and second pasteurizing device 11, 12, wherein the first outlet duct 15 and the second supply duct 14 are connected to each other to allow the liquid food mixture to pass in succession from the first to the second pasteurizing device 11, 12.

According to this embodiment, the presence is envisaged of a first and second measuring device of the temperature 17, 18 of the liquid food mixture at the inlet and/or at the outlet of the first and second pasteurizing device 11, 12 respectively, associated with the first and second outlet duct 15, 16 respectively.

Furthermore, as can be seen in figure 3, associated with the first and second outlet duct 15, 16 respectively downstream of the first and second temperature measuring device 17, 18, there is the presence of a first and second selective blocking device 35, 36 of the first and second outlet duct 15, 16.

In particular, said first and second selective blocking device 35, 36 are independent of each other and respectively connected to the first and second temperature measuring device 17, 18 so as to block the above first and second outlet ducts 15, 16 if the liquid food mixture inside and/or leaving the first and second pasteurizing device 11, 12 is not at a particular temperature required by the pasteurization process.

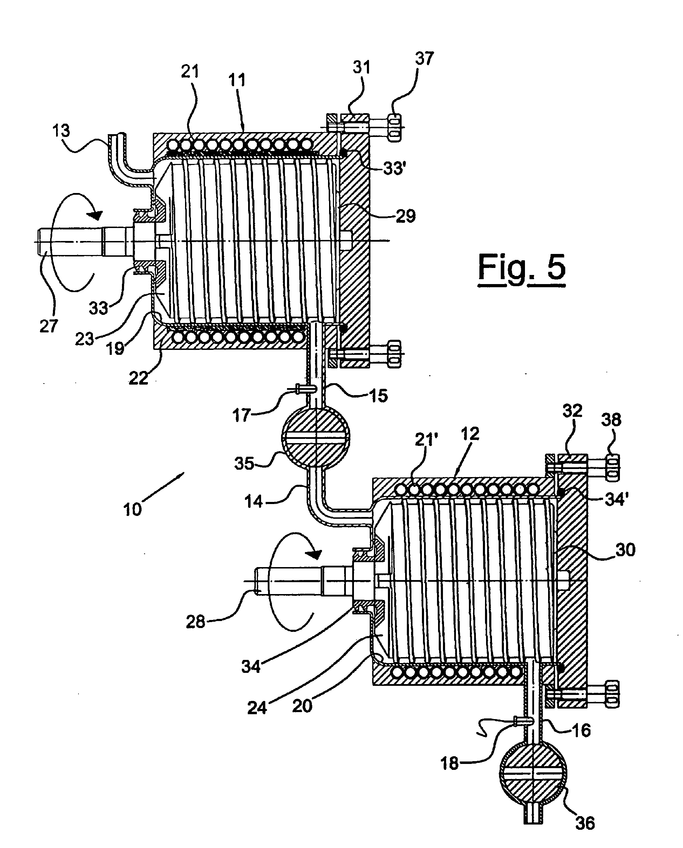

Figures 3 and 5 respectively show two different functioning phases of the preferred embodiment described above, wherein in figure 3 both the first and second selective blocking devices 35, 36 are in an "open" position to allow the liquid food mixture to pass from the first to the second pasteurization device 11, 12 and from the second pasteurization device 12 towards the outside, re spectively.

Alternatively, as shown in figure 4, if the temperature measured by the first and second temperature measuring device 17, 18 of the liquid food mixture inside and/or leaving the first and second pasteurizing device 11, 12 is not equal to a particular temperature required by the pasteurization process, the first and/or second selective blocking device 35, 36 will "close" the first and/or second outlet duct 15, 16 respectively, consequently withholding the liquid food mixture inside the first and second pasteurizing device 11, 12 until the above particular temperature required is reached.

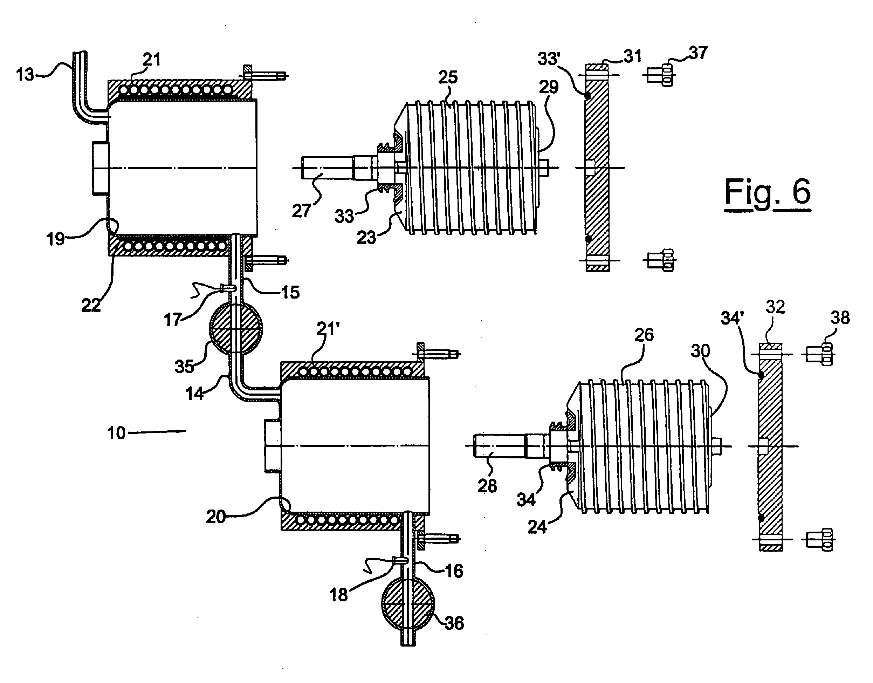

In particular, in the preferred embodiment shown in figures 3-7, the first pasteurization device 11 is a heating pasteurizing device 11 comprising heating means 21, 22 of the liquid food mixture, whereas the second pasteurizing device 12 is a cooling pasteurizing device 12 comprising cooling means 21' of the liquid food mixture.

According to some particular embodiments, the above heating means 21, 22 envisaged in the heating pasteurizing device 11 can comprise electric resistances and/or at least one coil of copper tube in which a hot fluid or gas circulates transferring heat to the flow of mixture.

Alternatively, these hearing means 21, 22 can comprise a series of rings forcedly fitted externally on the relative rotor 23 forming a series of annular chambers having at least one connection hole between each other and a further outer cylinder welded onto the above series of rings forming a first airtight chamber equipped with an entry hole and an outlet hole inside which a hot fluid circulates.

As far as the cooling pasteurizing device 12 is concerned, the cooling means 21' can comprise an airtight chamber, analogous to that described above, equipped with an entry hole and an outlet hole inside which a cold fluid circulates.

In this case, said cooling pasteurizing device 12 can be advantageously used as an evaporation element of a CO₂ gas cooling system. As it is known, moreover, that this gas operates at high pressures (about 100 bar) and that consequently in gas phase at the outlet of the compressor it releases considerable heat, around 100°C, this heat can be exploited by passing said very hot gas (CO₂ inside the first heating pasteurizing device 11 where the mixture is heated, with a considerable saving of energy and with the same facilitated cleaning and sanitization of the group 10.

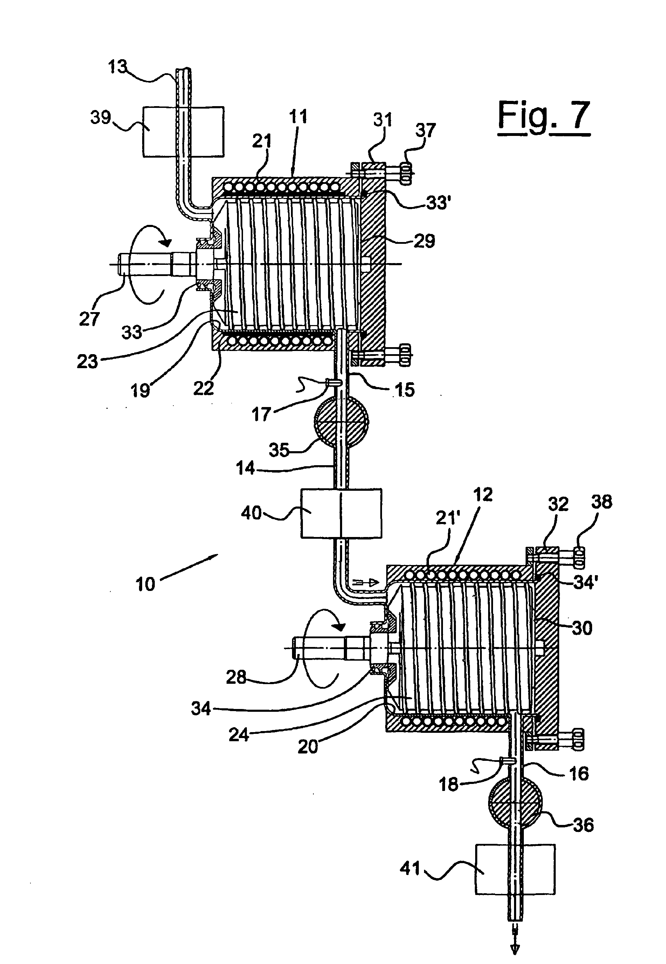

Finally, as shown in the embodiment of figure 7, the pasteurizing group 10 according to the present invention can also comprise at least one homogenizing device 39, 40, 41 associated with at least one supply duct 13, 14 and/or at least one outlet duct 15, 16 of the first and/or second pasteurizing device 11, 12.

It is extremely easy to understand the functioning of the device, object of the invention.

As can be deduced from the above description, the pasteurizing group 10 of liquid food mixtures according to the present invention comprises at least one pasteurizing device, preferably two, 11, 12 equipped with thermal exchange means 21, 22, 21', at least one supply duct 13, 14 and at least one outlet duct 15, 16 associated with at least one pasteurizing device 11, 12 for the passage at the inlet and outlet of the liquid food mixtures to be pasteurized.

The pasteurizing group 10 also comprises temperature control means 17, 18 of the liquid food mixtures inside and/or leaving the at least one pasteurizing device 11, 12 and selective blocking means 35, 36 of the at least one outlet duct 15, 16.

In particular said selective blocking means 35, 36 are connected to the temperature control means 17, 18 to block the at least one outlet duct 15, 16 should the temperature 17, 18 of the liquid food mixtures inside and/or leaving the at least one pasteurizing device 11, 12 be different from a particular temperature required.

In the first preferred embodiment described, where there is a single pasteurizing device 11, thanks to thermal exchange means 21, 22, 21', it alternatively acts as a heating and cooling pasteurizing device in succession under the control of/driven by the temperature measurement device 17, which 17 also "frees" the first outlet duct 15 only when the pasteurization has been completed.

In the second preferred embodiment shown in figures 3-7, the pasteurizing group 10 of liquid food mixtures according to the present invention comprises a first and a second pasteurizing device 11, 12 , one for heating 11, the other for cooling 12, respectively, the liquid food mixtures to be pasteurized, in addition to a first and second supply duct 13, 14 and a first and second outlet duct 15, 16, respectively associated with the first and second pasteurizing device 11, 12.

In particular, in said embodiment, the first outlet duct 15 and the second supply duct 14 are connected to each other, to allow the liquid food mixture to be pasteurized to pass from the first 11 to the second pasteurizing device 12.

As described above, this embodiment envisages the presence of a first and second temperature measuring device 17, 18 of the liquid food mixture inside and/or leaving the first and second pasteurizing device 11, 12 respectively, associated with the first and second outlet duct 15, 16 respectively, for "blocking" the same should the temperature 17, 18 of the liquid food mixture inside and/or leaving the first and second pasteurizing device 11, 12 be different from particular temperatures required.

During the functioning of the group 10 described above, the liquid food mixture is introduced from a container not shown into the first supply duct 13 and then into the first heating pasteurizing device 11.

In said pasteurizing device 11, the mixture is entrapped in the helicoidal cavity 25 and is carried forwards by the rotation of the first cylindrical rotor 23 into the relative first cylindrical chamber 19.

During this advancement, the heating means 21, 22 associated with the first pasteurizing device 11 heat the liquid food mixture until it has reached a certain temperature, for example about 85°C.

When this temperature has been reached, measured by the first temperature measurement device 17, the first blocking device 35 allows the mixture to pass through the first outlet duct 15 in the second supply duct 14 and enter the second cooling pasteurizing device 12.

In this pasteurizing device 12, the mixture is entrapped in the helicoidal cavity 26 and is carried forwards by the rotation of the second cylindrical rotor 24.

During this advancement, the cooling means 21' associated with the second pasteurizing device 12 cool the liquid food mixture until it has reached a certain temperature, for example about 4°C.

Once this temperature has been reached, measured by the second temperature measurement device 18, the pasteurization of the liquid food mixture has been completed and the second blocking device 36 allows the mixture to pass through the second outlet duct 16.

In particular, the first and second blocking device 35, 36 operate complete independently and only in relation to the single temperature of the mixture measured by the relative temperature measuring device 17, 18, inside and/or leaving each pasteurizing device 11, 12.

From the above description with reference to the figures, it is evident how a high-efficiency and easy-to-clean pasteurizing group of liquid food mixtures according to the invention is particularly useful and advantageous.

The pasteurizing group 10 according to the present invention, in fact, guarantees a continuous, correct and rapid pasteurization of the liquid food mixture to be pasteurized thanks to the first and second blocking device 35, 36 of the first and second outlet duct 15, 16 as the above liquid food mixture passes from the two pasteurizers 11, 12 only after reaching a pre-established temperature revealed by the specific first and second temperature measurement devices 17, 18.

Furthermore, the pasteurizing group 10 according to the present invention is particularly easy to assemble and dismantle consequently allowing an easy cleaning of all the components of the same group.

The objective mentioned in the preamble of the description is therefore achieved.

The forms, as also the materials, of the high-efficiency and easy-to-clean pasteurizing group of liquid food mixtures according to the invention can obviously differ from that shown for purely illustrative and nonlimiting purposes in the drawings.

The protection scope of the invention is therefore delimited by the enclosed claims.

## Claims

1. A pasteurizing group (10) of liquid food mixtures comprising at least one pasteurizing device (11, 12), at least one supply duct (13, 14) and at least one outlet duct (15, 16) for said liquid food mixtures associated with said at least one pasteurizing device (11, 12), temperature control means (17, 18) of said liquid food mixtures inside and/or leaving said at least one pasteurizing device (11, 12) **characterized in that** it comprises selective blocking means (35, 36) of said at least one outlet duct (15,. 16) for blocking said at least one outlet duct (15,16), so as to prevent said liquid food mixture from leaving at least said pasteurizing device (11,12) when said liquid food mixture is not at a certain temperature.

2. The pasteurizing device (10) according to claim 1, **characterized in that** said at least one pasteurizing device (11, 12) comprises a cylindrical chamber (19, 20), thermal exchange means (21, 22, 21') and a cylindrical rotor (23, 24) having an external diameter substantially equal to the internal diameter of said cylindrical chamber (19, 20), said cylindrical rotor (23, 24) having a helicoidal cavity, or groove (25, 26) on the outer surface.

3. The pasteurizing device (10) according to claim 2, **characterized in that** said rotor (23, 24) comprises at one end an entrainment shaft (27, 28) and at an opposite end a buffer surface (29, 30) adjacent to a closing flange (31, 32) of said cylindrical chamber 19, 20), said closing flange (31, 32) being kept in a closed position by fixing means (37, 38).

4. The pasteurizing device (10) according to claim 3, **characterized in that** said fixing means (37, 38) comprise at least one screw (37, 38) or at least one rapid hook.

5. The pasteurizing device (10) according to claim 4, **characterized in that** it comprises sealing means (33, 34, 33', 34') of said rotor (23, 24) in said cylindrical chamber (19, 20) closed by said closing flange (31, 32).

6. The pasteurizing device (10) according to claim 5, **characterized in that** said sealing means (33, 34, 33'-34') comprise a rotating sealing ring (33, 34) for sealing the entrainment shaft (27, 28) on said cylindrical chamber (19, 20) and sealing washers (33', 34') of said buffer surface (29, 30) on said cylindrical chamber (19, 20).

7. The pasteurizing device (10) according to claim 1, **characterized in that** it comprises at least one homogenizing device (39, 40, 41) associated with at least one supply duct (13, 14) and/or at least one outlet duct (15, 16) of said at least one pasteurizing device (11, 12).

8. The pasteurizing device (10) of liquid food mixtures according to claim 1, **characterized in that** it comprises a first and a second pasteurizing device (11, 12) for heating said liquid food mixtures, a first and a second supply duct (13, 14) and a first and a second outlet duct (15, 16) for said liquid food mixtures respectively associated with said first and second pasteurizing device (11, 12), a first and a second temperature measurement device (17, 18) of said liquid food mixtures leaving said first and second pasteurizing device (11, 12) associated with said first and second outlet duct (15, 16), a first and second selective blocking device (35, 36) of said first and second outlet duct (15, 16) connected to said first and second temperature measurement device (17, 18), said first outlet duct (15) and said supply duct (14) being connected to allow said liquid food mixtures to pass from said first to a second pasteurizing device (11, 12).

9. The pasteurizing device (10) of liquid food mixtures according to claim 8, **characterized in that** said first pasteurizing device (11) is a heating pasteurizing device (11) comprising heating means (21, 22) of said liquid food mixtures and said second pasteurizing device (12) is a cooling pasteurizing device (12) comprising cooling means (21') of said liquid food mixtures.

10. The pasteurizing device (10) of liquid food mixtures according to claim 9, **characterized in that** said heating means (21, 22) comprise electric resistances.

11. The pasteurizing device (10) of liquid food mixtures according to claim 9, **characterized in that** said heating means (21, 22) comprise at least one coil of copper tube inside which a hot fluid or gas circulates yielding heat.

12. The pasteurizing device (10) of liquid food mixtures according to claim 9, **characterized in that** said heating means (21, 22) comprise a series of rings forcedly fitted externally onto the cylinder, forming a series of annular chambers having at least one connection hole and a further outer cylinder welded onto said series of rings and the ends closed by two flanges forming a first airtight chamber equipped with an entry hole and an outlet hole inside which a hot fluid circulates.

13. The pasteurizing device (10) of liquid food mixtures according to claim 9, **characterized in that** said cooling means (21') comprise an airtight chamber equipped with an entry hole and an outlet hole inside which a cold fluid circulates.

14. The pasteurizing device (10) of liquid food mixtures according to claim 12, **characterized in that** said cooling means (21') comprise an airtight chamber equipped with an entry hole and an outlet hole inside which a cold fluid circulates, said chamber being an evaporation element of a cooling plant, for example CO₂.

## Patentansprüche

1. Pasteurisierungsgruppe (10) für flüssige Nahrungsmittelgemische, mit zumindest einer Pasteurisierungsvorrichtung (11, 12), zumindest einem Lieferrohr (13, 14) und zumindest einem Auslassrohr (15, 16) für die flüssigen Nahrungsmittelgemische, die der zumindest einen Pasteurisierungsvorrichtung (11, 12) zugeordnet sind, einem Temperatursteuermittel (17, 18) für die flüssigen Nahrungsmittelgemische innerhalb der zumindest einen Pasteurisierungsvomichtung (11, 12) und/oder diese verlassend,
**dadurch gekennzeichnet, dass** sie umfasst: ein Mittel zum selektiven Blockieren (35, 36) für das zumindest eine Auslassrohr (15, 16) zum Blockieren des zumindest einen Auslassrohres (15, 16), um so zu verhindern, dass das flüssige Nahrungsmittelgemisch zumindest die Pasteurisierungsvorrichtung (11, 12) verlässt, wenn sich das flüssige Nahrungsmittelgemisch nicht bei einer gewissen Temperatur befindet.

2. Pasteurisierungsvorrichtung (10) nach Anspruch 1,
**dadurch gekennzeichnet , dass** die zumindest eine Pasteurisierungsvorrichtung (11, 12) eine zylindrische Kammer (19, 20), ein Wärmeaustauschmittel (21, 22, 21') und einen zylindrischen Rotor (23, 24) umfasst, der einen Außendurchmesser besitzt, der im Wesentlichen gleich dem Innendurchmesser der zylindrischen Kammer (19, 20) ist, wobei der zylindrische Rotor (23, 24) einen spiralförmigen Hohlraum oder eine spiralförmigen Nut (25, 26) an der Außenfläche aufweist.

3. Pasteurisierungsvorrichtung (10) nach Anspruch 2,
**dadurch gekennzeichnet, dass** der Rotor (23, 24) an einem Ende eine Mitnahmewelle (27, 28) und an einem gegenüberliegenden Ende eine Pufferfläche (29, 30) benachbart einem Schließflansch (31, 32) der zylindrischen Kammer (19, 20) umfasst, wobei der Schließflansch (31, 32) durch ein Fixiermittel (37, 38) in einer geschlossenen Position gehalten ist.

4. Pasteurisierungsvorrichtung (10) nach Anspruch 3,
dadurch **gekenntzeichnet,** dass das Fixiermittel (37, 38) zumindest eine Schraube (37, 38) oder zumindest einen Schnellhaken aufweist.

5. Pasteurisierungsvorrichtung (10) nach Anspruch 4,
**dadurch gekennzeichnet, dass** sie ein Dichtmittel (33, 34, 33', 34') des Rotors (23, 24) in der zylindrischen Kammer (19, 20) umfasst, die durch den Schließflansch (31, 32) geschlossen ist.

6. Pasteurisierungsvorrichtung (10) nach Anspruch 5,
**dadurch gekennzeichnet, dass** das Dichtmittel (33, 34, 33', 34') einen Rotationsdichtring (33, 34) zum Abdichten der Mitnahmewelle (27, 28) an der zylindrischen Kammer (19, 20) und Dichtscheiben (33', 34') der Pufferfläche (29, 30) an der zylindrischen Kammer (19, 20) umfasst.

7. Pasteurisierungsvorrichtung (10) nach Anspruch 1,
**dadurch gekennzeichnet, dass** sie zumindest eine Homogenisiervorrichtung (39, 40, 41) umfasst, die zumindest einem Lieferrohr (13, 14) und/oder zumindest einem Auslassrohr (15, 16) der zumindest einen Pasteurisierungsvorrichtung (11, 12) zugeordnet ist.

8. Pasteurisierungsvorrichtung (10) für flüssige Nahrungsmittelgemische nach Anspruch 1,
**dadurch gekennzeichnet, dass** sie eine erste und eine zweite Pasteurisierungsvorrichtung (11, 12) zum Erwärmten der flüssigen Nahrungsmittelgemische, ein erstes und ein zweites Lieferrohr (13, 14) bzw. ein erstes und ein zweites Auslassrohr (15, 16) für die flüssigen Nahrungsmittelgemische, die der ersten und zweiten Pasteurisierungsvorrichtung (11, 12) zugeordnet sind, eine erste und eine zweite Temperaturmessvorrichtung (17, 18) für die die erste und zweite Pasteurisierungsvorrichtung (11, 12) verlassenden flüssigen Nahrungsmittelgemische, die dem ersten und zweiten Auslassrohr (15, 16) zugeordnet sind, eine erste und zweite Vorrichtung zum selektiven Blockieren (35, 36) für das erste und zweite Auslassrohr (15, 16) umfasst, die mit der ersten und zweiten Temperaturmessvorrichtung (17, 18) verbunden sind, wobei das erste Auslassrohr (15) und das Lieferrohr (14) verbunden sind, um einen Durchgang der flüssigen Nahrungsmittelgemische von der ersten zu einer zweiten Pasteurisierungsvorrichtung (11, 12) zuzulassen.

9. Pasteurisierungsvorrichtung (10) für flüssige Nahrungsmittelgemische nach Anspruch 8,
**dadurch gekennzeichnet, dass** die erste Pasteurisierungsvorrichtung (11) eine erwärmende Pasteurisierungsvorrichtung (11) ist, die ein Erwärmungsmittel (21, 22) für die flüssigen Nahrungsmittelgemische umfasst, und die zweite Pasteurisierungsvorrichtung (12) eine kühlende Pasteurisierungsvorrichtung (12) ist, die ein Kühlmittel (21') für die flüssigen Nahrungsmittelgemische umfasst.

10. Pasteurisierungsvorrichtung (10) für flüssige Nahrungsmittelgemische nach Anspruch 9,
**dadurch gekennzeichnet, dass** das Erwärmungsmittel (21, 22) elektrische Widerstände umfasst.

11. Pasteurisierungsvorrichtung (10) für flüssige Nahrungsmittelgemische nach Anspruch 9,
**dadurch gekennzeichnet, dass** das Erwärmungsmittel (21, 22) zumindest eine Wicklung aus Kupferrohr umfasst, innerhalb der ein heißes Fluid oder Gas zirkuliert, wobei Wärme erzielt wird.

12. Pasteurisierungsvorrichtung (10) für flüssige Nahrungsmittelgemische nach Anspruch 9,
**dadurch gekennzeichnet, dass** das Erwärmungsmittel (21, 22) eine Reihe von Ringen umfasst, die extern an den Zylinder pressgepaßt sind, wobei eine Reihe von Ringkammern mit zumindest einem Verbindungsloch gebildet wird, und ein weiterer Außenzylinder an die Reihe der Ringe geschweißt ist und die Enden durch zwei Flansche geschlossen sind, wobei eine erste luftdichte Kammer gebildet wird, die mit einem Eintrittsloch und einem Austrittsloch ausgestattet ist, innerhalb dem ein heißes Fluid zirkuliert.

13. Pasteurisierungsvorrichtung (10) für flüssige Nahrungsmittelgemische nach Anspruch 9,
**dadurch gekennzeichnet, dass** das Kühlmittel (21') eine luftdichte Kammer umfasst, die mit einem Eintrittsloch und einem Austrittsloch ausgestattet ist, innerhalb dem ein kaltes Fluid zirkuliert.

14. Pasteurisierungsvorrichtung (10) für flüssige Nahrungsmittelgemische nach Anspruch 12,
**dadurch gekennzeichnet , dass** das Kühlmittel (21') eine luftdichte Kammer umfasst, die mit einem Eintrittsloch und einem Austrittsloch ausgestattet ist, innerhalb dem ein kaltes Fluid zirkuliert, wobei die Kammer ein Verdampfungselement einer Kühlanlage, beispielsweise CO₂ ist.

## Revendications

1. Groupe de pasteurisation (10) de mélanges de nourriture liquide comprenant au moins un appareil de pasteurisation (11, 12), au moins une conduite d'alimentation (13, 14) et au moins une conduite de sortie (15, 16) pour lesdits mélanges de nourriture liquide associées audit au moins un appareil de pasteurisation (11, 12), un moyen de réglage de température (17, 18) desdits mélanges de nourriture liquide à l'intérieur de et/ou quittant ledit au moins un appareil de pasteurisation (11, 12), **caractérisé en ce qu'**il comprend un moyen de blocage sélectif (35, 36) de ladite au moins une conduite de sortie (15, 16), pour bloquer ladite au moins une conduite de sortie (15, 16), afin d'empêcher ledit mélange de nourriture liquide de quitter au moins ledit appareil de pasteurisation (11, 12) quand ledit mélange de nourriture liquide n'est pas à une certaine température.

2. Appareil de pasteurisation (10) selon la revendication 1, **caractérisé en ce que** ledit au moins un appareil de pasteurisation (11, 12) comprend une chambre cylindrique (19, 20), un moyen d'échange thermique (21, 22, 21') et un rotor cylindrique (23, 24) ayant un diamètre extérieur substantiellement égal au diamètre intérieur de ladite chambre cylindrique (19, 20), ledit rotor cylindrique (23, 24) comportant une cavité ou rainure hélicoïdale (25, 26) sur sa surface extérieure.

3. Appareil de pasteurisation (10) selon la revendication 2, **caractérisé en ce que** ledit rotor (23, 24) comprend en une extrémité un arbre d'entraînement (27, 28) et en une extrémité opposée une surface d'amortissement (29, 30) adjacente à une bride de fermeture (31, 32) de ladite chambre cylindrique (19, 20), ladite bride de fermeture (31, 32) étant maintenue dans une position fermée par un moyen de fixation (37, 38).

4. Appareil de pasteurisation (10) selon la revendication 3, **caractérisé en ce que** ledit moyen de fixation (37, 38) comprend au moins une vis (37, 38) ou au moins un crochet rapide.

5. Appareil de pasteurisation (10) selon la revendication 4, **caractérisé en ce qu'**il comprend un moyen d'étanchéité (33, 34, 33', 34') dudit rotor (23, 24) dans ladite chambre cylindrique (19, 20) fermée par ladite bride de fermeture (31, 32).

6. Appareil de pasteurisation (10) selon la revendication 5, **caractérisé en ce que** ledit moyen d'étanchéité (33, 34, 33', 34') comprend une bague d'étanchéité rotative (33, 34) pour rendre étanche l'arbre d'entraînement (27, 28) sur ladite chambre cylindrique (19, 20) et des rondelles d'étanchéité (33', 34') de ladite surface d'amortissement (29, 30) sur ladite chambre cylindrique (19, 20).

7. Appareil de pasteurisation (10) selon la revendication 1, **caractérisé en ce qu'**il comprend au moins un dispositif d'homogénéisation (39, 40, 41) associé à au moins une conduite d'alimentation (13, 14) et/ou au moins une conduite de sortie (15, 16) dudit au moins un appareil de pasteurisation (11, 12).

8. Appareil de pasteurisation (10) de mélanges de nourriture liquide selon la revendication 1, **caractérisé en ce qu'**il comprend un premier et un deuxième appareil de pasteurisation (11, 12) pour chauffer lesdits mélanges de nourriture liquide, une première et une deuxième conduite d'alimentation (13, 14) et une première et une deuxième conduite de sortie (15, 16) pour lesdits mélanges de nourriture liquide respectivement associés auxdits premier et deuxième appareils de pasteurisation (11, 12), un premier et un deuxième dispositif de mesure de température (17, 18) desdits mélanges de nourriture liquide quittant lesdits premier et deuxième appareils de pasteurisation (11, 12) associés auxdites première et deuxième conduites de sortie (15, 16), un premier et un deuxième dispositif de blocage sélectif (35, 36) desdites première et deuxième conduites de sortie (15, 16) connectées auxdits premier et deuxième dispositifs de mesure de température (17, 18), ladite première conduite de sortie (15) et ladite conduite d'alimentation (14) étant connectées pour permettre auxdits mélanges de nourriture liquide de passer dudit premier appareil de pasteurisation vers un deuxième appareil de pasteurisation (11, 12).

9. Appareil de pasteurisation (10) de mélanges de nourriture liquide selon la revendication 8, **caractérisé en ce que** ledit premier appareil de pasteurisation (11) est un dispositif de pasteurisation chauffant (11) comprenant un moyen de chauffage (21, 22) desdits mélanges de nourriture liquide et ledit deuxième appareil de pasteurisation (12) est un appareil de pasteurisation refroidisseur (12) comprenant un moyen de refroidissement (21') desdits mélanges de nourriture liquide.

10. Appareil de pasteurisation (10) de mélanges de nourriture liquide selon la revendication 9, **caractérisé en ce que** ledit moyen de chauffage (21, 22) comprend des résistances électriques.

11. Appareil de pasteurisation (10) de mélanges de nourriture liquide selon la revendication 9, **caractérisé en ce que** ledit moyen de chauffage (21, 22) comprend au moins un enroulement de tube de cuivre à l'intérieur duquel circule un fluide ou gaz chaud qui cède de la chaleur.

12. Appareil de pasteurisation (10) de mélanges de nourriture liquide selon la revendication 9, **caractérisé en ce que** ledit moyen de chauffage (21, 22) comprend une série de bagues montées serrées sur l'extérieur du cylindre, formant une série de chambres annulaires comportant au moins un trou de connexion et un cylindre extérieur supplémentaire soudé sur ladite série de bagues et les extrémités fermées par deux brides formant une première chambre hermétique à l'air pourvue d'un trou d'entrée et d'un trou de sortie à l'intérieur duquel circule un fluide chaud.

13. Appareil de pasteurisation (10) de mélanges de nourriture liquide selon la revendication 9, **caractérisé en ce que** ledit moyen de refroidissement (21') comprend une chambre hermétique à l'air pourvue d'un trou d'entrée et d'un trou de sortie à l'intérieur duquel circule un fluide froid.

14. Appareil de pasteurisation (10) de mélanges de nourriture liquide selon la revendication 12, **caractérisé en ce que** ledit moyen de refroidissement (21') comprend une chambre hermétique à l'air pourvue d'un trou d'entrée et d'un trou de sortie à l'intérieur duquel circule un fluide froid, ladite chambre étant un élément d'évaporation d'une installation de refroidissement, par exemple du CO₂.
